Europäisches Patentamt

European Patent Office

Office européen des brevets

(11) Veröffentlichungsnummer: **0 262 416 B1**

# EUROPÄISCHE PATENTSCHRIFT

(45) Veröffentlichungstag der Patentschrift: **20.04.94**

(51) Int. Cl.⁵: **G08B 29/00**

(21) Anmeldenummer: **87112599.3**

(22) Anmeldetag: **29.08.87**

(54) **Selbstüberwachende Reflexionslichtschranke.**

(30) Priorität: **01.09.86 DE 3629715**

(43) Veröffentlichungstag der Anmeldung:
**06.04.88 Patentblatt 88/14**

(45) Bekanntmachung des Hinweises auf die
Patenterteilung:
**20.04.94 Patentblatt 94/16**

(84) Benannte Vertragsstaaten:
**AT BE CH DE ES FR GB GR IT LI LU NL SE**

(56) Entgegenhaltungen:
**EP-A- 0 189 536
US-A- 4 224 608**

**SIEMENS ZEITSCHRIFT, Band 42, Nr. 4, April
1968, Seiten 300-302, München, DE; H.-J.
WEISSBACH et al.: "Gleichlichtschranken
und Hochfrequenz-Wechsellichtschranken"**

(73) Patentinhaber: **FRAUNHOFER-GESELLSCHAFT
ZUR FÖRDERUNG DER ANGEWANDTEN FOR-
SCHUNG E.V.
Leonrodstrasse 54
D-80636 München(DE)**

(72) Erfinder: **Gebhard, Hermann
Händelweg 18
D-4620 Castrop-Rauxel(DE)**
Erfinder: **Köbbing, Heinz
Penningskamp 6
D-4600 Dortmund 30(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Reflexionslichtschranke gemäß dem Oberbegriff des Patentanspruchs 1.

Reflexionslichtschranken gemäß dem Oberbegriff des Patentanspruchs 1, die auch als Lichttaster bezeichnet werden, werden beispielsweise für die Erkennung von Objekten, die Überwachung von Räumen, als Kollisionsschutz für selbstfahrende Fahrzeuge etc. eingesetzt.

Die bisher bekannten Reflexionslichtschranken bzw. Lichttaster haben jedoch den Nachteil, daß ein Ausfall der Lichtschranke bzw. des Lichttasters nicht ohne weiteres vom normalen Betriebszustand zu unterscheiden ist, da sowohl bei einem Ausfall des Lichttasters als auch dann, wenn kein Objekt erkannt wird, kein Signal auftritt.

Der Erfindung liegt deshalb die Aufgabe zugrunde, eine Reflexionslichtschranke (Lichttaster) mit einem Meß-Lichtsender und einem Meß-Lichtempfänger gemäß dem Oberbegriff des Patentanspruchs 1 derart weiterzubilden, daß ein Ausfall sicher erkannt werden kann.

Eine erfindungsgemäße Lösung dieser Aufgabe ist mit ihren Weiterbildungen in den Patentansprüchen gekennzeichnet.

Erfindungsgemäß sind mindestens ein weiterer Lichtempfänger und ein weiterer Lichtsender vorgesehen. Der weitere Lichtempfänger empfängt das Licht des Meß-Lichtsenders, ohne daß dieses an einem Objekt reflektiert werden müßte. Damit kann anhand des Ausgangssignals des weiteren Lichtempfängers überprüft werden, ob der Meß-Lichtsender Licht ausstrahlt.

Der weitere Lichtsender sendet in einem Testzyklus Licht aus, das ohne Reflexion von dem Meß-Lichtempfänger empfangen wird. Durch diesen Testzyklus ist es möglich, den Meß-Lichtempfänger auf einwandfreie Funktion zu überprüfen, d.h. es kann erkannt werden, ob er bei auftreffendem Licht ein entsprechendes Ausgangssignal abgibt.

Weiterbildungen der Erfindung sind in den Unteransprüchen angegeben.

Gemäß Anspruch 2 wird erfindungsgemäß eine Strahlteilerplatte verwendet, die das Licht des Meß-Lichtsenders in den zu überwachenden Raum umlenkt und das aus dem überwachenden Raum reflektierte Licht auf den Meß-Lichtempfänger reflektiert. "Hinter" der Strahlteilerplatte sind der weitere Lichtsender und der weitere Lichtempfänger derart angeordnet, daß sie das durch die Strahlteilerplatte hindurchgehende Licht des Meß-Lichtsenders empfangen bzw. der Meß-Lichtempfänger das durch die Strahlteilerplatte hindurchgehende Licht des weiteren Lichtsenders empfängt. Diese Anordnung hat eine Reihe von Vorteilen: Zum einen erlaubt sie den Aufbau einer kompakten Reflexionslichtschranke. Zum anderen ermöglicht sie - wie im folgenden noch erläutert werden wird - eine Selbsttestfunktion der Reflexionslichtschranke, die nicht nur ein Erkennen eines Ausfalls, sondern zusätzlich auch eine Fehlerzuordnung erlaubt.

Beispielsweise ist es bei dem im Anspruch 2 gekennzeichneten Aufbau möglich, gemäß Anspruch 3 einen dritten Lichtempfänger vorzusehen, der das von der Rückseite der Strahlteilerplatte reflektierte Licht des weiteren Lichtsenders empfängt. Bei geeigneter geometrischer Ausbildung kann darüberhinaus dieser Lichtempfänger auch das von einem Objekt reflektierte Licht empfangen und ermöglicht damit eine weitere Überwachung des Meß-Lichtempfängers.

In jedem Falle ist es besonders vorteilhaft, wenn die erfindungsgemäße Reflexionslichtschranke eine elektronische Steuerschaltung aufweist, die nicht nur ein Auslesen der Ausgangssignale des Meß-Lichtempfängers erlaubt, sondern die darüberhinaus auch einen Selbsttest ausführen kann.

Besonders vorteilhaft ist es dabei, wenn gemäß Anspruch 6 die elektronische Steuerschaltung zusätzlich zu dem eigentlichen Meßzyklus einen Selbsttestzyklus, bei dem die Funktion des Meß-Lichtsenders und die Funktion des Meß-Lichtempfängers überprüft werden, sowie einen sog. Dunkeltest ausführt, bei dem überprüft wird, ob auf die einzelnen Empfänger Fremdlicht auftrifft.

Die Erfindung wird nachstehend anhand von Ausführungsbeispielen unter Bezugnahme auf die Zeichnung näher beschrieben, in der zeigen:

Fig. 1                eine Ansicht eines ersten Ausführungsbeispiels,
Fig. 2A            schematisch ein zweites Ausführungsbeispiel im Meßzyklus,
Fig. 2B            schematisch das zweite Ausführungsbeispiel im Testzyklus,
Fig. 3A-D          Impulsdiagramme zur Erläuterung der Betriebsweise der erfindungsgemäßen Reflexionslichtschranke, und
Fig. 4A und B      ein drittes Ausführungsbeispiel.

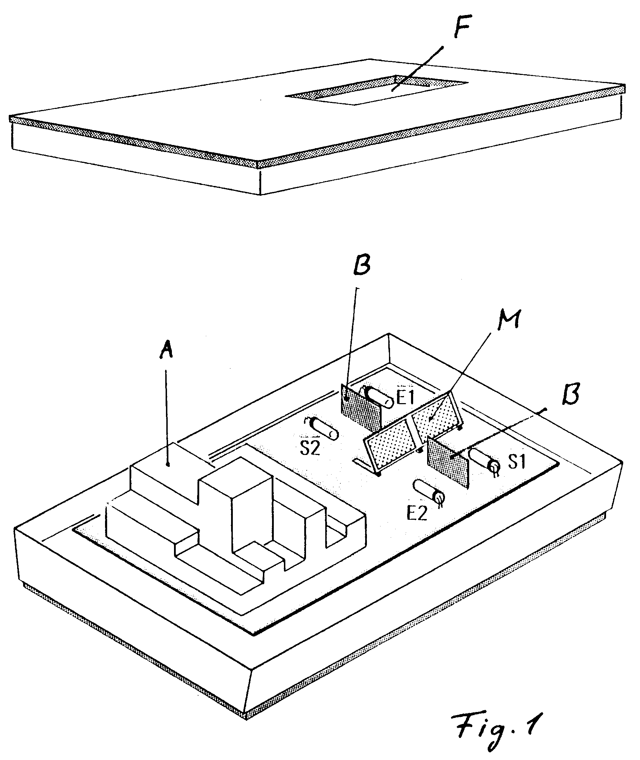

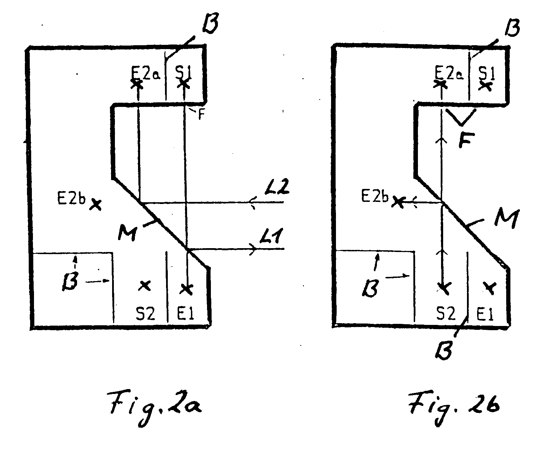

In den Fig. 1 und 2 sind Ausführungsbeispiele einer erfindungsgemäßen Reflexionslichtschranke bzw. Lichttasters dargestellt, wobei mit S allgemein Lichtsender, die bei den dargestellten Ausführungsbeispielen im IR-Bereich arbeitende Leuchtdioden sind, und mit E Lichtempfänger, beispielsweise Fotodioden, bezeichnet sind.

Der Lichtsender S1 ist der Meß-Lichtsender, der Licht L1 über einen Spiegel M in einen zu überwachenden Raum aussendet. Das von einem in dem zu überwachenden Raum befindlichen Objekt reflektierte Licht L2 wird ebenfalls an dem Spiegel M reflektiert und von einem Meß-Lichtempfänger E2 bei dem in Fig. 1 dargestellten Ausführungsbeispiel bzw. einem Meß-Lichtempfänger E2a bei dem in Fig. 2 dargestellten Ausführungsbeispiel empfangen.

Bei einem Lichttaster, der in bekannter Weise lediglich einen Meß-Lichtsender und einen Meß-Lichtempfänger aufweist, läßt sich ein Betriebszustand, der durch einen Ausfall des Senders und/oder Empfängers hervorgerufen wird, nicht von dem Betriebszustand unterscheiden, bei dem sich kein Objekt in dem zu überwachenden Raum befindet. Dies bedeutet, daß derartige herkömmliche Lichttaster nicht eigensicher sind und damit beispielsweise nicht als berührungslos wirkende Schutzeinrichtungen für selbstfahrende Fahrzeuge verwendet werden können.

Erfindungsgemäß sind deshalb mindestens ein weiterer Lichtempfänger E1, der das Licht des Meß-Lichtsenders S1 ohne Reflexion an einem in dem zu überwachenden Raum befindlichen Objekt empfängt, und mindestens ein weiterer Lichtsender S2 vorgesehen sind, der in einem Testzyklus Licht sendet, das der Meß-Lichtempfänger E2 bzw. E2a empfängt, ohne daß eine Reflexion an einem Objekt erforderlich wäre. Hierzu ist der Spiegel M als teildurchlässiger Spiegel ausgeführt, der unter einem 45°-Winkel zur Verbindungslinie der Lichtsender/empfänger E1/S1 bzw. E2/S2 angeordnet ist.

Darüberhinaus ist bei dem in Fig. 2 dargestellten Ausführungsbeispiel noch ein dritter Lichtempfänger E2b vorgesehen, der das an der Rückseite des Spiegels M reflektierte Licht des Lichtsenders S2 bzw. das durch den teildurchlässigen Spiegel M hindurchgehende Licht empfängt, das von einem in dem zu überwachenden Raum befindlichen Objekt reflektiert wird.

Ferner sind in den Fig. 1 und 2 mit F Aus- bzw. Eintrittsfenster für das Licht und mit B Blenden bezeichnet, die verhindern, daß die verschiedenen Sender und Empfänger interferieren.

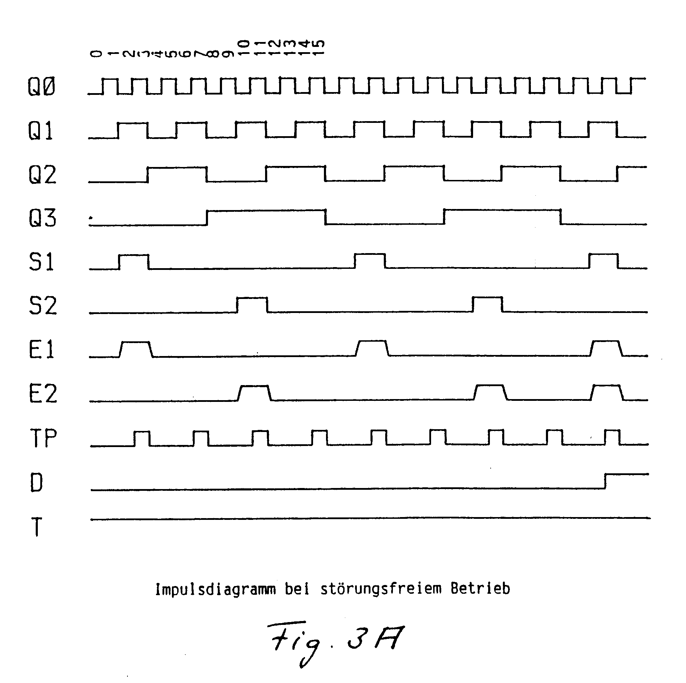

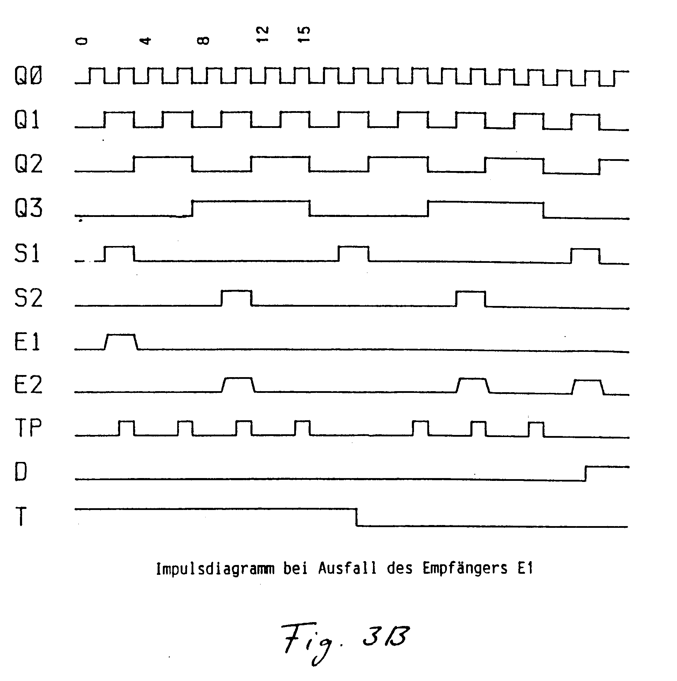

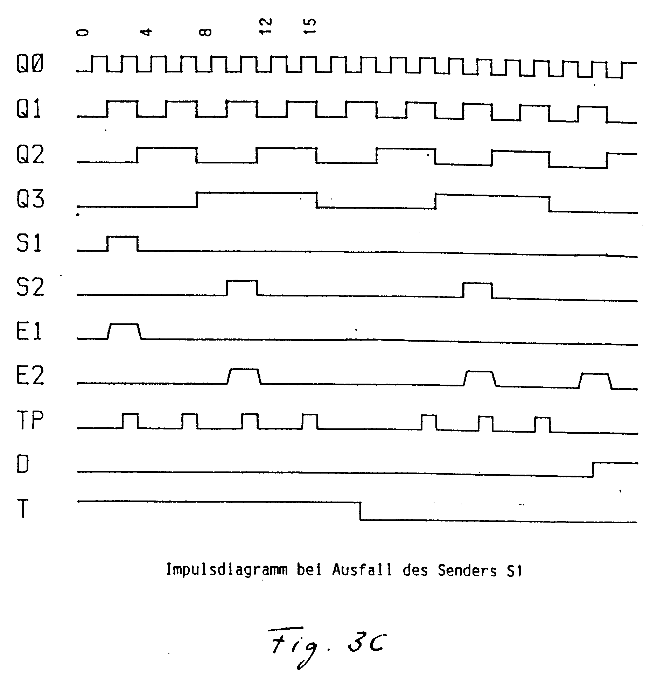

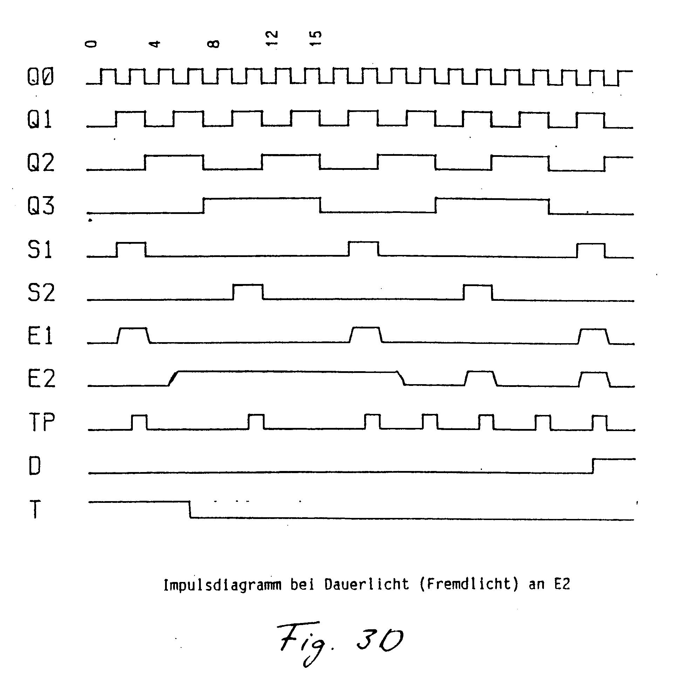

Um die einzelnen Signale eindeutig zuordnen zu können, werden die einzelnen Sender in aufeinanderfolgenden "Zeitfenstern", i.f. auch als Auswertungsfenster bezeichnet, von einer nur schematisch dargestellten Auswerteelektronik A angesteuert. Diese Betriebsweise für das in Fig. 2 dargestellte Ausführungsbeispiel wird im folgenden unter Bezugnahme auf Fig. 3 näher erläutert. Die Betriebsweise des in Fig. 1 dargestellten Ausführungsbeispiel ist ähnlich mit der Ausnahme, daß kein dritter Empfänger E2b vorhanden ist.

Im ersten von vier Auswertungsfenster leuchtet der Lichtsender bzw. die Leuchtdiode S1; dabei muß ein Teil des Strahls durch den Spiegel M, der eine Strahlteilerplatte oder ein Spiegel mit einem kleinen Loch bzw. einer freien Mittelzone sein kann, auf den Empfänger E1 fallen. Ist dies nicht der Fall, so ist entweder S1 oder E1 defekt oder der Strahlteiler M defekt oder verschmutzt.

Über den Empfänger E2a wird in diesem Auswertungsfenster eine evtl. Reflexion des Strahls an einem in dem zu überwachenden Raum befindlichen Objekt erkannt. Deshalb kann das erste Auswertungsfenster auch als Meßzyklus bezeichnet werden.

Im zweiten Auswertungsfenster wird ein Dunkeltest durchgeführt, d.h., es wird überprüft, ob bei ausgeschalteten Sender an den Empfängern kein Signal auftritt. Hierdurch können Störungen der Empfänger oder Fremdlichteinflüsse erkannt werden.

Im dritten Auswertungsfenster strahlt die Leuchtdiode S2 auf den Empfänger E2b bzw. durch den Strahlteiler auf den Empfänger E2a. Ist dies nicht der Fall, so sind entweder S2, E2a oder E2b defekt, oder der Strahlteiler M ist defekt, verschmutzt oder fehlt. Damit werden S2, E1, E2a, E2b und der Strahlteiler M überprüft.

Der Empfänger E1 darf in diesem Zyklus kein Signal erkennen, da er sonst defekt ist oder durch fremde Lichtquellen beleuchtet wird.

Im vierten Auswertungsfenster wird wieder der Dunkeltest wie im zweiten Auswertungszyklus durchgeführt.

Die an E1 und E2a/b empfangenen Signale werden über eine Logikschaltung miteinander verknüpft. Dabei werden drei Ausgangssignale erzeugt. Am Ausgang TP (Testpuls) wird jedesmal ein Impuls abgegeben, wenn der Selbsttest eine einwandfreie Funktion des Tasters ergeben hat. Wenn sich dieser Ausgang statisch verhält (z.B. bei Leitungsunterbrechungen) oder Impulse ausfallen, liegt eine Fehlfunktion des Tasters vor. Hierdurch ist gleichzeitig eine Eigensicherung des elektronischen Teils des Tasters realisiert.

Wird eine Fehlfunktion des Tasters erkannt, so wird außerdem der Ausgang T (Test) auf Low-Pegel gesetzt. Dieser Zustand kann nur durch einen externen Rücksetz-Befehl aufgehoben werden.

Das Signal am Ausgang D (Daten) zeigt an, ob eine Reflexion des Strahl erkannt wurde oder nicht. Es wird jedesmal im Auswertungsfenster 1 aktualisiert.

Der Ablauf des Meßvorgangs wird durch einen 4-Bit-Zähler gesteuert. Hierdurch werden alle möglichen inneren Systemzustände nacheinander durchlaufen und geprüft. Die Auswertung erfolgt nur zu bestimmten Zeitpunkten, wenn alle relevanten Signale stabil anliegen. Das ist bei den Zählerständen 3, 7, 11 und 15 der Fall.

Das Signal E2 ergibt sich dabei aus einer logischen UND-Verknüpfung der Empfängersignale E2a und E2b. Durch diese Maßnahme wird auch das Fehlen des Strahlteilers erkannt.

Weiterhin kann durch den Impulsbetrieb der Infrarot-Sender eine höhere Sendeleistung und damit eine größere Tastweite erreicht werden.

Die Signale an den beiden Ausgängen TP und D ergeben sich aus folgender Wahrheitstabelle:

(S1, S2 = Sendesignale; E1, E2 = Empfängersignale, TP = Testausgang, D = Datenausgang (0 bei Unterbrechung des Strahls))

```
S1    S2      E1      E2      TP      D(neu)

-------------------------------------------------

1     0       0       x       0       x         Fenster 1

              1       0       1       0

              1       1       1       1

-------------------------------------------------

0     0       1       x       0       D         Fenster 2, 4

              x       1       0       D         (Dunkeltest)

              0       0       1       D

-------------------------------------------------

0     1       0       0       0       D         Fenster 3

              0       1       1       D

              1       x       0       0

-------------------------------------------------
```

Alle anderen Zustände führen zu TP = 0 und damit zum Ausfall von Impulsen an TP.

Die folgende Tabelle gibt die Erzeugung und Darstellung dder Systemzustände und des Ausgangs TP bei ordnungsgemäßer Funktion des Lichttasters wieder:

```
Zustand   Q3  Q2  Q1  Q0    S1  S2  E1  E2  TP

----------------------------------------------------------

0         0   0   0   0     0   0   0   0   0
1         0   0   0   1     0   0   0   0   0
2         0   0   1   0     1   0   1   0   0
3         0   0   1   1     1   0   1   0   1    1.Auswertung
4         0   1   0   0     0   0   0   0   0
5         0   1   0   1     0   0   0   0   0
6         0   1   1   0     0   0   0   0   0
7         0   1   1   1     0   0   0   0   1    2.Auswertung
8         1   0   0   0     0   0   0   0   0
9         1   0   0   1     0   0   0   0   0
10        1   0   1   0     0   1   0   ?   0
11        1   0   1   1     0   1   0   1   1    3.Auswertung
12        1   1   0   0     0   0   0   0   0
13        1   1   0   1     0   0   0   0   0
14        1   1   1   0     0   0   0   0   0
15        1   1   1   1     0   0   0   0   1    4.Auswertung
```

4

Eine Fehlfunktion wird nach maximal drei Perioden des Signals Q0 erkannt. Bei z.B. f(Q0) = 1000 Hz ergibt sich somit eine Reaktionszeit von 3 ms.

Die in Fig. 3 A-D dargestellten Impulsdiagramme zeigen die Signalverläufe bei verschiedenen Betriebsbedingungen; da diese Impulsdiagramme aus heraus verständlich sind, kann auf eine nähere Erläuterung verzichtet werden.

Fig. 3A: Diagramm 1: Störungsfreier Betrieb

Fig. 3B: Diagramm 2: Störungsfall "Ausfall von Empfänger E1"

Fig. 3C: Diagramm 3: Störungsfall "Ausfall von Sender S1"

Fig. 3D: Diagramm 4: Störungsfall "Fremdlicht am Empfanger E2"

Da ein Aufbau der Austwerteelektronik aufgrund der vorstehenden Funktionsbeschreibung ohne weiteres möglich ist, ist auf eine detaillierte Beschreibung des Schaltungsaufbaus verzichtet worden.

Vorstehend ist die Erfindung anhand von Ausführungsbeispielen ohne Beschränkung des allgemeinen Erfindungsgedankens - wie er sich aus den Ansprüchen ergibt - beschrieben worden. Innerhalb dieses allgemeinen Erfindungsgedankens sind selbstverständlich die verschiedensten Modifikationen möglich:

Beispielsweise ist es möglich, den Meßzyklus länger als die anderen Auswertungsfenster auszulegen.

Auch können anstelle von IR-Leuchtdioden als Lichtsender andere Sender verwendet werden, die in einem anderen Spektralbereich arbeiten.

Ferner ist es möglich, für die Auswerteelektronik einen Mikroprozessor oder einen Ein-Chip-Mikrocomputer anstelle von diskreten Logikbausteinen zu verwenden.

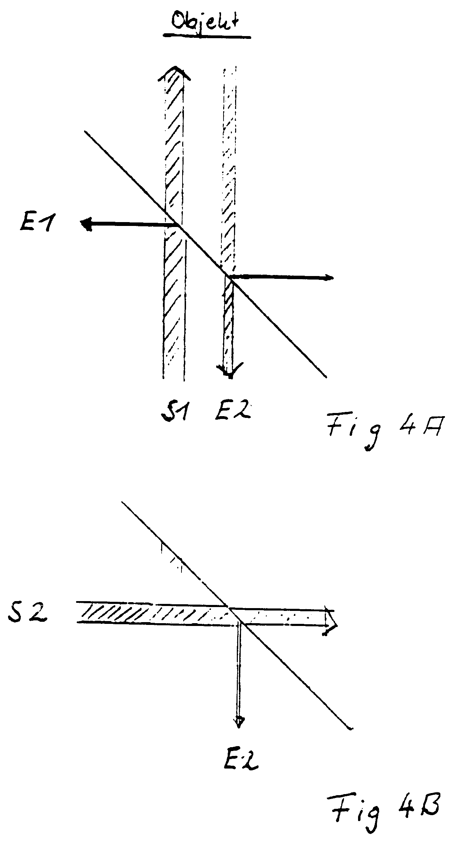

Die geometrische Gestaltung des erfindungsgemäßen Lichttasters kann selbstverständlich von der Form der Ausführungsbeispiele abweichen. Beispielsweise ist es möglich, wie in Fig. 4 schematisch für ein drittes Ausführungsbeispiel dargestellt, den Meß-Lichtsender S1 den Meß-Lichtempfänger E2 so anzuordnen, daß das Meßlicht ohne Reflexion ausgestrahlt bzw. das an einem Objekt reflektierte Licht ohne Reflexion am Strahlteiler M auf den Empfänger E1 auftrifft. Entsprechend wird das auf den Empfänger E1 auftreffende Licht am Strahlteiler reflektiert bzw. das Licht des Senders S2 trifft nach Reflexion am Strahlteiler M auf den Empfänger E2 auf.

Der Meß- und der Testzyklus bei einer derartigen Anordnung sind schematisch in Fig. 4A bzw. 4B dargestellt.

## Patentansprüche

1. Reflexionslichtschranke mit einem Meß-Lichtsender (S1), der Licht in einem zu überwachenden Raum sendet, und einem Meß-Lichtempfänger (E2,E2a), der von einem in dem zu überwachenden Raum befindlichen Objekt reflektiertes Licht empfängt, dadurch **gekennzeichnet**, daß mindestens ein weiterer Lichtempfänger (E1), der das Licht des Meß-Lichtsenders (S1) ohne Reflexion empfängt, und mindestens ein weiterer Lichtsender (S2) vorgesehen sind, der in einem Testzyklus Licht sendet, das der Meß-Lichtempfänger (E2;E2a) ohne Reflexion empfängt.

2. Reflexionslichtschranke nach Anspruch 1, dadurch **gekennzeichnet**, daß eine Strahlteilerplatte (M) vorgesehen ist, vor der nebeneinander der Meß-Lichtsender (S1) und der Meß-Lichtempfänger (E2;E2a) derart angeordnet sind, daß die Strahlteilerplatte das vom Meß-Lichtsender ausgehende Licht in den zu überwachenden Raum bzw. das aus dem zu überwachenden Raum kommende Licht auf den Meß-Lichtempfänger umlenkt, und daß hinter der Strahlteilerplatte (M) der weitere Lichtsender (S2) und der weitere Lichtempfänger (E1) derart angeordnet sind, daß der Lichtempfänger (E1) das durch die Strahlteilerplatte (M) hindurchgehende Licht des Meß-Lichtsenders (S1) und der Meß-Lichtempfänger (E2;E2a) das durch die Strahlteilerplatte hindurchgehende Licht des weiteren Lichtsenders (S2) empfängt.

3. Reflexionslichtschranke nach Anspruch 2, dadurch **gekennzeichnet**, daß ein dritter Lichtempfänger (E2b) vorgesehen ist, der das von der Rückseite der Strahlteilerplatte (M) reflektierte Licht des weiteren Lichtsenders (S2) empfängt.

4. Reflexionslichtschranke nach Anspruch 1, dadurch **gekennzeichnet**, daß eine Strahlteilerplatte (M) vorgesehen ist, die das Licht des Meß-Lichtsenders (M1) auf den weiteren Empfänger (E1) und das Licht des weiteren Lichtsenders (L2) auf den Meß-Lichtempfanger (E2) umlenkt.

**EP 0 262 416 B1**

**5.** Reflexionslichtschranke nach einem der Ansprüche 1 bis 3,
dadurch **gekennzeichnet**, daß die Strahlteilerplatte (M) unter einem 45°-Winkel zur Verbindungslinie des Meß-Lichtempfänger (E2;E2a) bzw. -senders (S1) mit dem weiteren Sender (S2) bzw. dem weiteren Empfänger (E1) angeordnet ist.

**6.** Reflexionslichtschranke nach einem der Ansprüche 1 bis 5,
dadurch **gekennzeichnet**, daß eine elektronische Steuerschaltung (A) vorgesehen ist, die einen Selbsttest durchführt.

**7.** Reflexionslichtschranke nach Anspruch 6,
dadurch **gekennzeichnet**, daß die elektronische Steuerschaltung einen Meßzyklus, einen Selbsttestzyklus und einen Dunkeltest ausführt.

**8.** Reflexionslichtschranke nach einem der Ansprüche 1 bis 7,
dadurch **gekennzeichnet**, daß die Lichtsender (S1,S2) im Infrarot-Bereich arbeitende Leuchtdioden sind.

**9.** Reflexionslichtschranke nach Anspruch 8,
dadurch **gekennzeichnet**, daß die Leuchtdioden im Impulsbetrieb betrieben werden.

**10.** Reflexionslichtschranke nach einem der Ansprüche 2 bis 9,
dadurch **gekennzeichnet**, daß über die Strahlteilerplatte (M) der überwiegende Teil des Lichts des Meß-Lichtsenders auf das Objekt gelenkt wird.

**11.** Reflexionslichtschranke nach einem der Ansprüche 2 bis 10,
dadurch **gekennzeichnet**, daß die Strahlteilerplatte (M) ein Spiegel ist, bei dem jeweils ein kleiner die Verbindungslinien der Lichtsender (S1,S2) und Lichtempfänger (E1,E2; E2a) umgebender Bereich unverspiegelt ist.

**Claims**

**1.** A reflection light barrier comprising a measuring light emitter (S1) which emits light into an area for monitoring, and a measuring light receiver (E2, E2a) which receives the light reflected by an object in the area for monitoring, characterised in that at least one other light receiver (E1) is provided with receives the light from the measuring light emitter (S1) without reflection, and at least one other light emitter (S2) is provided with in a test cycle emits light which the measuring light receiver (E2; E2a) receives without reflection.

**2.** A reflection light barrier according to claim 1, characterized in that a beam splitter plate (M) is provided in front of which the measuring light emitter (S1) and the measuring light receiver (E2; E2a) are so disposed side by side that the beam splitter plate deflects into the area for monitoring the light emitted by the measuring light receiver and deflects on to the measuring light receiver the light coming from the area for monitoring, and in that the additional light emitter (S2) and the additional light receiver (E1) are so disposed behind the beam splitter plate (M) that the light receiver (E1) receives the light from the measuring light emitter (S1) passing through the beam splitter plate (M) and the measuring light receiver (E2; E2a) receives the light from the additional light emitter (S2) passing through the beam splitter plate.

**3.** A reflection light barrier according to claim 2, characterised in that a third light receiver (E2b) is provided which receives the light from the additional light emitter (S2) reflected by the hack of the beam splitter plate (M).

**4.** A reflection light barrier according to claim 1, characterized in that a beam splitter plate (M) is provided which deflects on to the additional receiver (E1) the light from the measuring light emitter (M1) and on to the measuring light receiver (E2) the light from the additional light emitter (L2).

**5.** A reflection light barrier according to any one of claims 1 to 3, characterised in that the beam splitter plate (M) is disposed at an angle of 45° to the line connecting the measuring light receiver (E2; E2a)

6

and emitter (S1) respectively to the additional emitter (S2) and additional receiver (E1) respectively.

6. A reflection light barrier according to any one of claims 1 to 5, characterised in that an electronic control circuit (A) is provided which performs an auto-test.

7. A reflection light barrier according to claim 6, characterised in that the electronic control circuit performs a measuring cycle, an auto-test cycle and a dark test.

8. A reflection light barrier according to any one of claims 1 to 7, characterized in that the light emitters (S1, S2) are LED's operating in the infrared range.

9. A reflection light barrier according to claim 8, characterized in that the LED's are operated in pulse operation.

10. A reflection light barrier according to any one of claims 2 to 9, characterized in that the majority of the light from the measuring light emitter is deflected on to the object by way of the beam splitter plate (M).

11. A reflection light barrier according to any one of claims 2 to 10, characterized in that the beam splitter plate (M) is a mirror in which a small area surrounding the lines connecting the light emitters (S1, S2) and light receivers (E1, E2; E2a) respectively is non-mirrored.

**Revendications**

1. Barrière lumineuse à réflexion avec un émetteur de lumière de mesure (S1) qui envoie de la lumière dans un espace à surveiller, et avec un récepteur de lumière de mesure (E2, E2a), qui reçoit la lumière réfléchie par un objet se trouvant dans l'espace à surveiller, caractérisée en ce qu'on prévoit au moins un autre récepteur de lumière (E1), qui reçoit la lumière de l'émetteur de lumière de mesure (S1) sans réflexion, et au moins un autre émetteur de lumière (S2), cycle qui envoie dans un cycle de test de la lumière, qui reçoit le récepteur de lumière de mesure (E2 ; E2a) sans réflexion.

2. Barrière lumineuse à réflexion selon la revendication 1, caractérisée en ce qu'on prévoit une lame séparatrice (M) devant laquelle sont disposés côte à côte l'émetteur de lumière de mesure (S1) et le récepteur de lumière de mesure (E2 ; E2a) de telle façon que la lame séparatrice dévie la lumière sortant de l'émetteur de lumière de mesure dans l'espace à surveiller ou la lumière venant de l'espace à surveiller sur le récepteur de lumière de mesure et en ce que derrière la lame séparatrice (M), on dispose l'autre émetteur de lumière (S2) et l'autre récepteur de lumière (E1) de telle sorte que le récepteur de lumière (E1) reçoive la lumière passant à travers la lame séparatrice (M), de l'émetteur de lumière de mesure (S1) et le récepteur de lumière de mesure (E2 ; E2a) reçoive la lumière de mesure (S1) et le récepteur de mesure (E2 ; E2a) reçoive la lumière passant à travers la lame séparatrice, de l'autre émetteur de lumière (S2).

3. Barrière lumineuse à réflexion selon la revendication 2, caractérisée en ce que l'on prévoit un troisième récepteur de lumière (E2b), qui reçoit la lumière réfléchie par le verso de la lame séparatrice (m), de l'autre émetteur de lumière (S2).

4. Barrière lumineuse à réflexion selon la revendication 1, caractérisée en ce que l'on prévoit une lame séparatrice (M), qui dévie la lumière de l'émetteur de lumière de mesure (M1) sur l'autre récepteur (E1) et la lumière de l'autre émetteur de lumière (L2) sur le récepteur de lumière de mesure (E2).

5. Barrière lumineuse à réflexion selon l'une des revendications 1 à 3, caractérisée en ce que la lame séparatrice (M) est disposée en formant un angle de 45° par rapport à la ligne de liaison du récepteur de lumière de mesure (E2 ; E2a) ou de l'émetteur de lumière de mesure (S1) avec l'autre émetteur (S2) ou à l'autre récepteur (E1).

6. Barrière lumineuse à reflexion selon l'une des revendications 1 à 5, caractérisée en ce que l'on prévoit un circuit électronique de commande (A), qui effectue un test automatique.

**7.** Barrière lumineuse à réflexion selon la revendication 6, caractérisée en ce que le circuit électronique de commande effectue un cycle de mesure, un cycle de test automatique et un test d'obscurité.

**8.** Barrière lumineuse à réflexion selon l'une des revendications 1 à 7, caractérisée en ce que les émetteurs de lumière (S1, S2) sont des diodes luminescences fonctionnant dans la zone des infrarouges.

**9.** Barrière lumineuse à réflexion selon la revendication 8, caractérisée en ce que les diodes luminescentes sont utilisées en régime impulsionnel.

**10.** Barrière lumineuse à réflexion selon l'une des revendications 2 à 9, caractérisée en ce que l'on dévie sur l'objet au moyen de la lame séparatrice (M) la partie prépondérante de la lumière de l'émetteur de lumière de mesure.

**11.** Barrière lumineuse à réflexion selon l'une des revendications 2 a 10, caractérisée en ce que la lame séparatrice (M) est un miroir, dans le cas duquel on n'applique pas de couche réfléchissante sur une petite zone entourant les lignes de liaison des émetteurs de lumière (S1, S2) et des récepteurs de lumière (E1, E2 ; E2a)

Fig. 1

EP 0 262 416 B1

Fig. 2a

Fig. 2b

10

Impulsdiagramm bei störungsfreiem Betrieb

Fig. 3A

Impulsdiagramm bei Ausfall des Empfängers E1

*Fig. 3B*

Impulsdiagramm bei Ausfall des Senders S1

Fig. 3C

Impulsdiagramm bei Dauerlicht (Fremdlicht) an E2

Fig. 30

Objekt

E1

S1  E2

Fig 4A

S2

E2

Fig 4B